# EUROPEAN PATENT APPLICATION

(11) **EP 4 194 984 A1**
(43) Date of publication of application: **14.06.2023**
(21) Application number: 22212363.0
(22) Date of filing: 08.12.2022
(51) Int. Cl.: G05B 23/02

(54) **METHOD AND APPARATUS FOR EARLY WARNING OF FAILURE**

(30) Priority: 10.12.2021 CN 202111509647
(71) Applicant: Beijing Baidu Netcom Science Technology Co., Ltd., Beijing 100085 (CN)
(72) Inventor: YANG, Tianxing, BEIJING, 100085 (CN); YANG, Chen, BEIJING, 100085 (CN); SUN, Zhuo, BEIJING, 100085 (CN)
(74) Representative: Regimbeau

(57) **Abstract**

Provided are a method and apparatus for early warning of a failure, an electronic device, and a non-transitory computer-readable storage medium, and computer program product, which relate to the field of artificial intelligence, particularly, knowledge graph and natural language processing technologies. The implementation scheme includes that: a target device is inspected (S101) in a current inspection period to obtain a current value of a target device parameter; a new value of the target device parameter in a new inspection period is predicted (S102) according to historical inspection records of the target device in historical inspection periods and the current value of the target device parameter; and early warning of a failure is performed (S103) according to a preset early warning rule and the new value of the target device parameter.

## Description

### TECHNICAL FIELD

The present disclosure relates to the field of artificial intelligence, particularly, knowledge graph and natural language processing technologies, and specifically, a method and apparatus for early warning of a failure, an electronic device, a non-transitory computer-readable storage medium, and a computer program product.

### BACKGROUND

With the development of science and technologies, the automation has been gradually achieved in more and more fields and products, and complex human labor is replaced by an automatic device, so that the productivity is greatly improved. In a process of achieving the automation of the device, an operating state of the device needs to be timely and effectively acquired and managed.

### SUMMARY

The present disclosure provides a method and apparatus for early warning of a failure, an electronic device, a non-transitory computer-readable storage medium, and a computer program product.

According to an aspect of the present disclosure, a method for early warning of a failure is provided. The method for early warning of a failure includes the following: a target device is inspected in a current inspection period to obtain a current value of a target device parameter; a new value of the target device parameter in a new inspection period is predicted according to historical inspection records of the target device in historical inspection periods and the current value of the target device parameter; and early warning of a failure is performed according to a preset early warning rule and the new value of the target device parameter.

According to an aspect of the present disclosure, an apparatus for early warning of a failure is provided. The apparatus for early warning of a failure includes an inspection module, a prediction module and an early warning module. The inspection module is configured to inspect a target device in a current inspection period to obtain a current value of a target device parameter. The prediction module is configured to predict a new value of the target device parameter in a new inspection period according to historical inspection records of the target device in historical inspection periods and the current value of the target device parameter. The early warning module is configured to perform early warning of a failure according to a preset early warning rule and the new value of the target device parameter.

According to another aspect of the present disclosure, an electronic device is provided. The electronic device includes at least one processor and a memory communicatively connected to the at least one processor. The memory stores an instruction executable by the at least one processor, and the instruction, when executed by the at least one processor, causes the at least one processor to perform the method for early warning of a failure described in any one of the embodiments of the present disclosure.

According to another aspect of the present disclosure, a non-transitory computer-readable storage medium storing a computer instruction is provided. The computer instruction is configured to cause a computer to perform the method for early warning of a failure described in any one of the embodiments of the present disclosure.

According to another aspect of the present disclosure, a computer program product is provided. The computer program product includes a computer program, and the computer program, when executed by a processor, implements the method for early warning of a failure described in any one of the embodiments of the present disclosure.

Based on the techniques of the present disclosure, the early warning for whether a failure occurs in the next inspection period is achieved based on the historical inspection records and the current value of the target device parameter.

It should be understood that the contents described here are not intended to identify key or critical features of the embodiments of the present disclosure, nor intended to limit the scope of the present disclosure. Other features of the present disclosure will be readily understood from the following description.

### BRIEF DESCRIPTION OF DRAWINGS

The drawings are intended to provide a better understanding of this scheme and are not to be construed as limiting the present disclosure, in which:
FIG. 1 is a flowchart of a method for early warning of a failure according to an embodiment of the present disclosure;
FIG. 2 is a flowchart of another method for early warning of a failure according to an embodiment of the present disclosure;
FIG. 3 is a flowchart of still another method for early warning of a failure according to an embodiment of the present disclosure;
FIG. 4 is a schematic structural diagram of an apparatus for early warning of a failure according to an embodiment of the present disclosure; and
FIG. 5 is a block diagram of an electronic device for implementing a method for early warning of a failure of an embodiment of the present disclosure.

### DETAILED DESCRIPTION

Exemplary embodiments of the present disclosure are described below with reference to the accompanying drawings, in which various details of embodiments of the present disclosure are included to assist understanding, and which are to be considered as merely exemplary. Therefore, those of ordinary skill in the art will recognize that various changes and modifications of the embodiments described herein may be made without departing from the scope and spirit of the present disclosure. Also, descriptions of well-known functions and structures are omitted in the following description for clarity and conciseness.

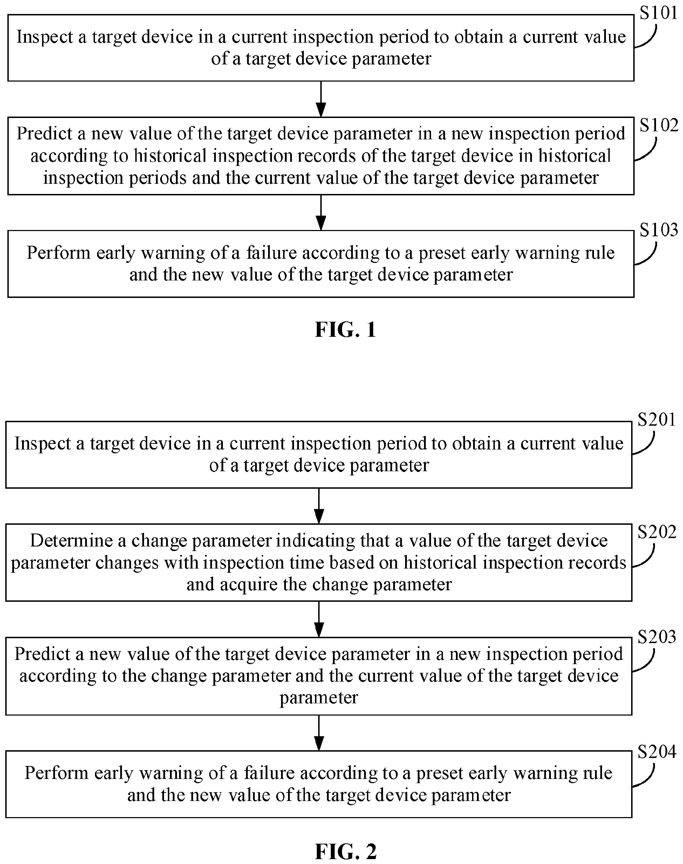

FIG. 1 is a flowchart of a method for early warning of a failure according to an embodiment of the present disclosure. This embodiment is applicable to a case where early warning of a failure is performed based on a value of a device parameter in historical inspection records. The method may be performed by an apparatus for early warning of a failure, and the apparatus is implemented in a software and/or hardware manner and is integrated on an electronic device.

Referring to FIG. 1, the method for early warning of a failure includes the following.

In S101, a target device is inspected in a current inspection period to obtain a current value of a target device parameter.

The target device in the embodiment of the present disclosure may optionally be a large device in the energy field, for example, the target device may be a transformer device and a substation device in a power plant, or may be a nuclear reactor device in a nuclear power plant. Due to a fact that the requirement for the safety coefficient of such target device is relatively high, a periodic inspection is needed, where the inspection refers to detecting a key component in the target device in an operating process of the target device so as to obtain the value of the target device parameter for measuring the safety state of the target device. It should be noted that the target device parameter is exemplary a surface crack, a surface temperature, dimensions and the like of the key component of the target device.

Since a periodic inspection needs to be performed on the target device, the current value of the target device parameter may be obtained after the target device is inspected in the current inspection period. It should be noted that after the current value of the target device parameter is obtained, whether the current value of the target device exceeds a preset threshold or not may be determined firstly, and if yes, then the target device needs to be examined and repaired in the current inspection period; if the current value of the target device parameter does not exceed the threshold, that is, the current value is within a normal range, and at this time, the value of the target device parameter in a next inspection period needs to be predicted through the steps S102 and S103, and whether the target device needs to be shut down for examination and repair in the next inspection period is predicted.

In S102, a new value of the target device parameter in a new inspection period is predicted according to historical inspection records of the target device in historical inspection periods and the current value of the target device parameter.

In an optional implementation, since the historical inspection records of the target device in the historical inspection periods include values of the target device parameter at different pieces of inspection time, a change rule of the target device parameter along with inspection time may be extracted from the historical inspection records, and a new value of the target device parameter in the next inspection period is estimated based on the current value and the change rule of the target device parameter.

In S103, early warning of a failure is performed according to a preset early warning rule and the new value of the target device parameter.

In the embodiment of the present disclosure, the preset early warning rule includes a condition that the target device is shut down for repair, and exemplarily, the early warning rule is that" the target device is required to be shut down for repair when the surface crack is greater than 0.5 centimeter". After the new value of the target device parameter is estimated, the new value is matched with the early warning rule, and if the new value of the target device parameter does not satisfy the early warning rule, then it is predicted that the new value of the target device parameter in the next inspection period is in the normal range; if the new value of the target device parameter satisfies the early warning rule, then it is indicated that the target device is required to be shut down for repair in the next inspection period, and at this time, the early warning of the failure is performed in advance so that it may be guaranteed that the avoidance and processing are performed before a failure occurs.

It should be noted that a process of determining the early warning rule includes the following. Firstly, a target device parameter threshold when the target device is required to be shut down for repair is determined from an examination and repair manual of the target device and/or a failure repair record of the target device. For example, an examination and repair manual and/or a failure repair record of the target device is analyzed based on a natural language processing technology, and a to-be-inspected target device parameter, a target device parameter threshold and a repair condition are extracted. Then, an early warning rule is constructed according to the device parameter threshold and the repair condition. The early warning rule is constructed based on the examination and repair manual and/or the failure repair record, so that the accuracy of the early warning rule can be ensured, and meanwhile the constructed early warning rule provides a guarantee for implementing the method for early warning of a failure described above.

According to the scheme of the present disclosure, early warning for whether a failure occurs in the next inspection period is achieved based on the historical inspection records and the current value of the target device parameter.

FIG. 2 is a flowchart of another method for early warning of a failure according to an embodiment of the present disclosure. On the basis of the above embodiments, a process in which the new value of the target device parameter in the new inspection period is predicted according to the historical inspection records of the target device in the historical inspection periods and the current value of the target device parameter is refined, referring to FIG. 2, the method for early warning of a failure in this embodiment includes the following.

In S201, a target device is inspected in a current inspection period to obtain a current value of a target device parameter.

In S202, a change parameter indicating that a value of the target device parameter changes with inspection time is determined based on historical inspection records and is acquired.

In the embodiment of the present disclosure, that the change parameter indicating that the value of the target device parameter changes with the inspection time is determined based on the historical inspection records includes following processes: a piece of inspection time and a historical value of the target device parameter both included in each inspection record are extracted from the historical inspection records; and a recording is performed according to the inspection time in a positive order, and optionally, in a specific implementation, the extracted historical values of the target device parameter at different pieces of inspection time are stored in a graph structure. For example, the target device is used as an entity, the target device parameter is used as attribute, and the historical values at different pieces of inspection time are used as attribute values, whereby a knowledge graph of the inspection records is formed, and the historical inspection records may be simply and conveniently viewed through the knowledge graph subsequently. A relation (such as a linear relation) between the historical values and the inspection time is determined according to the historical values of the target device parameter at different pieces of inspection time, whereby the change parameter indicating that the value of the target device parameter changes with the inspection time is determined, and it is ensured that the change parameter may be accurately obtained. The change parameter is exemplarily an increasing parameter of the value of the target device parameter along with the inspection time, the target device parameter being the surface crack is used as an example, and the change parameter being 0.05 centimeter indicates that the surface crack is increased by 0.05 centimeter in each inspection period.

It should be noted that, that the piece of inspection time and the historical value of the target device parameter included in each inspection record are extracted from the historical inspection records includes the following: a target extraction manner is determined according to a save format of the historical inspection records, where the save format of the inspection records may be: saving in a manner of a keyword plus a numerical value, saving in a word text manner or saving in a table manner. Correspondingly, the target extraction manner may optionally be a text extraction manner, a table extraction manner or a key-value extraction manner. The piece of inspection time and the historical value of the target device parameter included in each inspection record are extracted from the historical inspection records based on the determined target extraction manner. In this way, through different extraction manners, it may be ensured that the piece of inspection time and the historical value of the target device parameter corresponding to the piece of inspection time are accurately extracted from inspection records with different formats.

In S203, a new value of the target device parameter in a new inspection period is predicted according to the change parameter and the current value of the target device parameter.

After the change parameter is obtained through S202, optionally, a summation operation is performed on the current value of the target device parameter and the change parameter, and a sum value is used as a new value of the target device parameter in the new inspection period.

In S204, early warning of a failure is performed according to a preset early warning rule and the new value of the target device parameter.

To describe the above process in detail, the target device parameter being the surface crack is used as an example. If the inspection period is one month, it is determined from historical inspection records that the surface crack increases by 0.1 cm each month (i.e., change parameter). If the surface crack inspected in a current period is 0.4 cm, then it is predicted that the surface crack in the next inspection period is 0.5 cm. At this time, whether the surface crack 0.5 cm satisfies the condition of shutting down for repair or not is determined, if yes, the early warning of the failure is performed, thereby achieving the early warning in advance.

In the embodiments of the present disclosure, the historical inspection records are integrated together to obtain a relation between the value of the target device parameter and the inspection time so that the new value of the target device parameter in the next inspection period is predicted based on the relation, and the early warning of the failure is performed according to the early warning rule and the new value, thereby achieving the purpose of the early warning in advance.

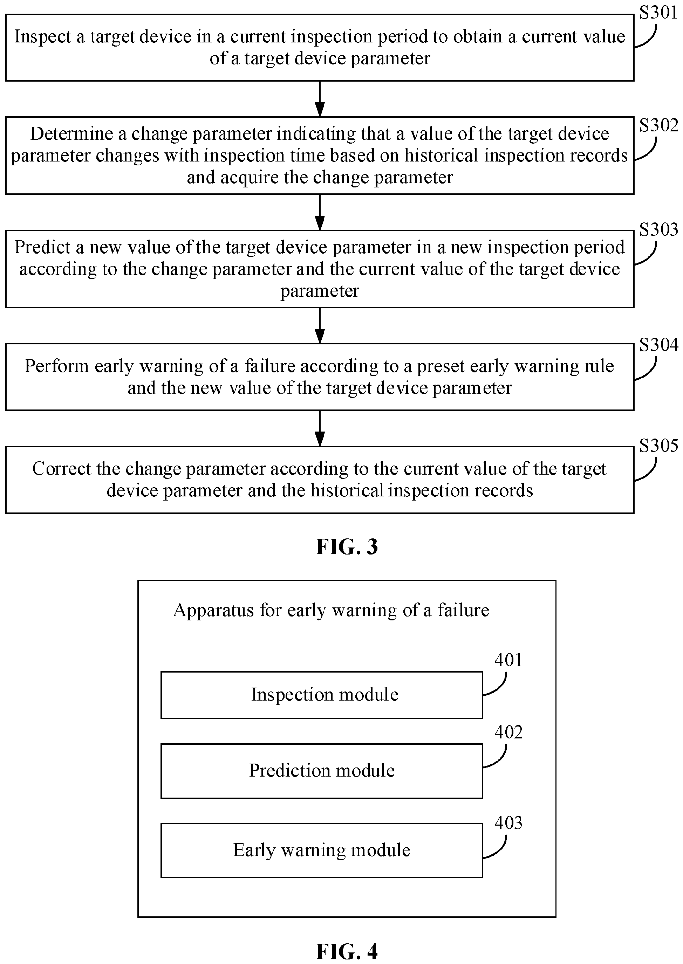

FIG. 3 is a flowchart of still another method for early warning of a failure according to an embodiment of the present disclosure. Refinement is made in this embodiment on the basis of the above-described embodiments, and referring to FIG. 3, the method for early warning of a failure includes the following.

In S301, a target device is inspected in a current inspection period to obtain a current value of a target device parameter.

In S302, a change parameter indicating that a value of the target device parameter changes with inspection time is determined based on historical inspection records and is acquired.

In S303, a new value of the target device parameter in a new inspection period is predicted according to the change parameter and the current value of the target device parameter.

In S304, early warning of a failure is performed according to a preset early warning rule and the new value of the target device parameter.

In S305, the change parameter is corrected according to the current value of the target device parameter and the historical inspection records.

In the embodiment of the present disclosure, after the early warning of the failure is performed, the change parameter may be corrected according to the current value of the target device parameter and values in a preset number of historical inspection records. For example, historical values of the target device parameter (such as a surface crack) in the historical inspection records are 0.1 cm, 0.1 cm and 0.2 cm in sequence, and the change parameter is 0.05 cm. If a current value of the surface crack obtained through inspection is 0.2, then the change parameter should be corrected to be 0.03 cm so that a prediction may be performed based on the corrected change parameter after the next inspection is finished. In this way, the accuracy of prediction can be ensured by dynamically correcting the change parameter.

FIG. 4 is a schematic structural diagram of an apparatus for early warning of a failure according to an embodiment of the present disclosure. This embodiment is applicable to a case where early warning of a failure is performed based on values of a device parameter in historical inspection records. As shown in FIG. 4, the apparatus includes an inspection module 401, a prediction module 402 and an early warning module 403. The inspection module 401 is configured to inspect a target device in a current inspection period to obtain a current value of a target device parameter. The prediction module 402 is configured to predict a new value of the target device parameter in a new inspection period according to historical inspection records of the target device in historical inspection periods and the current value of the target device parameter. The early warning module 403 is configured to perform early warning of a failure according to a preset early warning rule and the new value of the target device parameter.

On the basis of the above-described embodiment, optionally, the prediction module includes an acquisition unit and a prediction unit. The acquisition unit is configured to determine a change parameter indicating that a value of the target device parameter changes with inspection time based on the historical inspection records and acquire the change parameter. The prediction unit is configured to predict the new value of the target device parameter in the new inspection period according to the change parameter and the current value of the target device parameter.

On the basis of the above-described embodiment, optionally, the apparatus includes an extraction module and a parameter determination module. The extraction module is configured to extract, from the historical inspection records, a piece of inspection time and a historical value of the target device parameter both included in each inspection record. The parameter determination module is configured to determine the change parameter indicating that the value of the target device parameter changes with the inspection time according to historical values of the target device parameter at different pieces of inspection time.

On the basis of the above-described embodiment, optionally, the apparatus further includes a correction module. The correction module is configured to correct the change parameter according to the current value of the target device parameter and the historical inspection records.

On the basis of the above-described embodiment, optionally, the extraction module includes an extraction manner determination unit and an extraction unit. The extraction manner determination unit is configured to determine a target extraction manner according to a save format of the historical inspection records. The extraction unit is configured to extract the piece of inspection time and the historical value of the target device parameter both included in each inspection record from the historical inspection records based on the target extraction manner.

On the basis of the above-described embodiment, optionally, the apparatus further includes a threshold determination module and an early warning rule construction module. The threshold determination module is configured to determine, from an examination and repair manual of the target device and/or a failure repair record of the target device, a target device parameter threshold when the target device is required to be shut down for repair. The early warning rule construction module is configured to construct an early warning rule according to the device parameter threshold.

The apparatus for early warning of a failure provided in the embodiments of the present disclosure may execute the method for early warning of a failure provided in any of the embodiments of the present disclosure, and has functional modules and beneficial effects corresponding to the performed method. Contents not explicitly described in this embodiment may be referred to the description in any of the method embodiments of the present disclosure.

In the technical scheme of the present disclosure, the acquisition, storage, application and the like of the personal information of the related user all accord with the regulations of related laws and regulations, and do not violate the customs of public sequences.

According to embodiments of the present disclosure, the present disclosure further provides an electronic device, a readable storage medium and a computer program product.

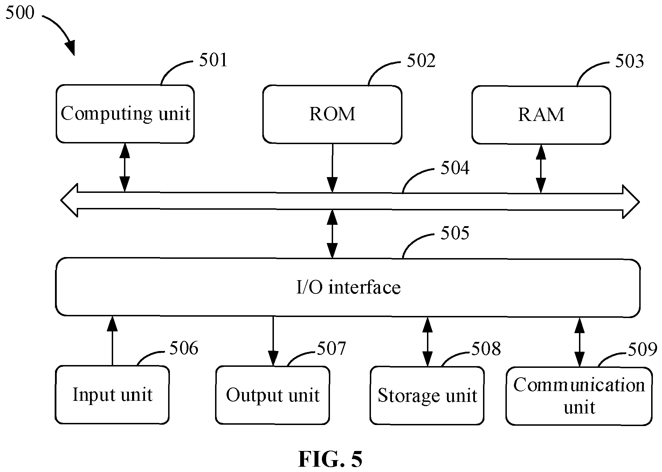

FIG. 5 shows a schematic block diagram of an exemplary electronic device 500 that may be used for implementing the embodiments of the present disclosure. The electronic device is intended to represent various forms of digital computers, such as laptops, desktops, workstations, personal digital assistants, servers, blade servers, mainframe computers, and other appropriate computers. The electronic device may also represent various forms of mobile devices, such as personal digital processing, cellphones, smartphones, wearable devices, and other similar computing devices. The components shown herein, their connections and relationships between these components, and the functions of these components, are illustrative only and are not intended to limit implementations of the present disclosure described and/or claimed herein.

As shown in FIG. 5, the device 500 includes a computing unit 501, the computing unit 501 may perform various appropriate actions and processes according to a computer program stored in a read-only memory (ROM) 502 or a computer program loaded from a storage unit 508 into a random-access memory (RAM) 503. The RAM 503 may also store various programs and data required for the operation of the device 500. The computing unit 501, the ROM 502, and the RAM 503 are connected via a bus 504. An input/output (I/O) interface 505 is also connected to the bus 504.

Multiple components in the device 500 are connected to the I/O interface 505, and the multiple components include an input unit 506 such as a keyboard or a mouse, an output unit 507 such as various types of displays or speakers, the storage unit 508 such as a magnetic disk or an optical disk, and a communication unit 509 such as a network card, a modem or a wireless communication transceiver. The communication unit 509 allows the device 500 to exchange information/data with other devices over a computer network such as the Internet and/or various telecommunication networks.

The computing unit 501 may be a variety of general-purpose and/or dedicated processing assemblies having processing and computing capabilities. Some examples of the computing unit 501 include, but are not limited to, a central processing unit (CPU), a graphics processing unit (GPU), a dedicated artificial intelligence (AI) computing chip, various computing units executing machine learning model algorithms, a digital signal processor (DSP) and any suitable processor, controller and microcontroller. The computing unit 501 performs the various methods and processes described above, such as the method for early warning of a failure. For example, in some embodiments, the method for early warning of a failure may be implemented as computer software programs tangibly embodied in a machine-readable medium, such as the storage unit 508. In some embodiments, part or all of computer programs may be loaded and/or installed on the device 500 via the ROM 502 and/or the communication unit 509. When the computer program is loaded to the RAM 503 and executed by the computing unit 501, one or more steps of the method for early warning of a failure described above may be executed. Alternatively, in other embodiments, the computing unit 501 may be configured, in any other suitable manners (e.g., by means of firmware), to perform the method for early warning of a failure.

Various implementations of the systems and technologies described above herein may be achieved in digital electronic circuit systems, integrated circuit systems, field-programmable gate arrays (FPGAs), application-specific integrated circuits (ASICs), application-specific standard products (ASSPs), systems on chip (SOCs), complex programmable logic devices (CPLDs), computer hardware, firmware, software, and/or combinations thereof. These various implementations may include implementation in one or more computer programs, and the one or more computer programs are executable and/or interpretable on a programmable system including at least one programmable processor, the programmable processor may be a dedicated or general-purpose programmable processor for receiving data and instructions from a memory system, at least one input device and at least one output device and transmitting data and instructions to the memory system, the at least one input device and the at least one output device.

Program codes for implementing the methods of the present disclosure may be written in any combination of one or more programming languages. These program codes may be provided for the processor or controller of a general-purpose computer, a dedicated computer, or another programmable apparatus for early warning of a failure to enable the functions/operations specified in a flowchart and/or a block diagram to be implemented when the program codes are executed by the processor or controller. The program codes may be executed entirely on a machine, partly on the machine, as a stand-alone software package, partly on the machine and partly on a remote machine, or entirely on the remote machine or server.

In the context of the present disclosure, a machine-readable medium may be a tangible medium that may contain or store a program available for an instruction execution system, apparatus or device or a program used in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any appropriate combination of the foregoing. More specific examples of the machine-readable storage medium may include an electrical connection based on one or more wires, a portable computer diskette, a hard disk, a random-access memory (RAM), a read-only memory (ROM), an erasable programmable read-only memory (EPROM) or a flash memory, an optical fiber, a portable compact disc read-only memory (CD-ROM), an optical storage device, a magnetic storage device, or any appropriate combination of the foregoing.

To provide the interaction with a user, the systems and technologies described here may be implemented on a computer. The computer has a display device (e.g., a cathode-ray tube (CRT) or liquid-crystal display (LCD) monitor) for displaying information to the user; and a keyboard and a pointing device (e.g., a mouse or a trackball) through which the user may provide input to the computer. Other kinds of devices may also be used for providing for interaction with the user; for example, feedback provided to the user may be sensory feedback in any form (such as, visual feedback, auditory feedback, or haptic feedback); and input from the user may be received in any form (including acoustic input, speech input, or haptic input).

The systems and technologies described here may be implemented in a computing system including a back-end component (e.g., a data server), or a computing system including a middleware component (such as, an application server), or a computing system including a front-end component (e.g., a client computer having a graphical user interface or a web browser through which the user may interact with the implementations of the systems and technologies described herein), or a computing system including any combination of such back-end component, middleware component, or front-end component. The components of the system may be interconnected by any form or medium of digital data communication (for example, a communication network). Examples of the communication network include a local area network (LAN), a wide area network (WAN) and the Internet.

The computing system may include clients and servers. A client and a server are generally remote from each other and typically interact through the communication network. A relationship between the clients and the servers arises by virtue of computer programs running on respective computers and having a client-server relationship to each other. The server may be a cloud server, a server of a distributed system, or a server combining a blockchain.

It should be understood that various forms of the flows shown above, reordering, adding or deleting steps may be used. For example, the steps described in the present disclosure may be executed in parallel, sequentially or in different orders as long as the desired result of the technical scheme provided in the present disclosure may be achieved. The execution sequence of these steps is not limited herein.

The above implementations should not be construed as limiting the protection scope of the present disclosure. It should be understood by those skilled in the art that various modifications, combinations, sub-combinations and substitutions may be made, depending on design requirements and other factors. Any modification, equivalent replacement, and improvement made within the spirit and principle of the present disclosure should be included within the protection scope of the present disclosure.

## Claims

1. A method for early warning of a failure, **characterized by** comprising:
inspecting (S101) a target device in a current inspection period to obtain a current value of a target device parameter;
predicting (SI02) a new value of the target device parameter in a new inspection period according to historical inspection records of the target device in historical inspection periods and the current value of the target device parameter; and
performing (S103) early warning of a failure according to a preset early warning rule and the new value of the target device parameter.

2. The method of claim 1, wherein predicting (S102) the new value of the target device parameter in the new inspection period according to the historical inspection records of the target device in the historical inspection periods and the current value of the target device parameter comprises:
determining, based on the historical inspection records, a change parameter indicating that a value of the target device parameter changes with inspection time, and acquiring the change parameter; and
predicting the new value of the target device parameter in the new inspection period according to the change parameter and the current value of the target device parameter.

3. The method of claim 2, wherein determining, based on the historical inspection records, the change parameter indicating that the value of the target device parameter changes with the inspection time comprises:
extracting, from the historical inspection records, a piece of inspection time and a historical value of the target device parameter both comprised in each of the historical inspection records; and
determining the change parameter indicating that the value of the target device parameter changes with the inspection time according to historical values of the target device parameter at different pieces of inspection time.

4. The method of claim 2 or 3, further comprising:
correcting the change parameter according to the current value of the target device parameter and the historical inspection records.

5. The method of claim 3, wherein extracting, from the historical inspection records, the piece of inspection time and the historical value of the target device parameter both comprised in each of the historical inspection records comprises:
determining a target extraction manner according to a save format of the historical inspection records; and
extracting the piece of inspection time and the historical value of the target device parameter both comprised in each of the historical inspection records from the historical inspection records based on the target extraction manner.

6. The method of claim 1, further comprising:
determining, from at least one of an examination and repair manual of the target device or a failure repair record of the target device, a target device parameter threshold when the target device is required to be shut down for repair; and
constructing an early warning rule as the preset early warning rule according to the target device parameter threshold.

7. An apparatus for early warning of a failure, **characterized by** comprising:
an inspection module (401), which is configured to inspect a target device in a current inspection period to obtain a current value of a target device parameter;
a prediction module (402), which is configured to predict a new value of the target device parameter in a new inspection period according to historical inspection records of the target device in historical inspection periods and the current value of the target device parameter; and
an early warning module (403), which is configured to perform early warning of a failure according to a preset early warning rule and the new value of the target device parameter.

8. The apparatus of claim 7, wherein the prediction module (402) comprises:
an acquisition unit, which is configured to determine, based on the historical inspection records, a change parameter indicating that a value of the target device parameter changes with inspection time, and acquire the change parameter; and
a prediction unit, which is configured to predict the new value of the target device parameter in the new inspection period according to the change parameter and the current value of the target device parameter.

9. The apparatus of claim 8, further comprising:
an extraction module, which is configured to extract, from the historical inspection records, a piece of inspection time and a historical value of the target device parameter both comprised in each of the historical inspection records; and
a parameter determination module, which is configured to determine the change parameter indicating that the value of the target device parameter changes with the inspection times according to historical values of the target device parameter at different pieces of inspection time.

10. The apparatus of claim 8 or 9, further comprising:
a correction module, which is configured to correct the change parameter according to the current value of the target device parameter and the historical inspection records.

11. The apparatus of claim 9, wherein the extraction module comprises:
an extraction manner determination unit, which is configured to determine a target extraction manner according to a save format of the historical inspection records; and
an extraction unit, which is configured to extract the piece of inspection time and the historical value of the target device parameter both comprised in each of the historical inspection records from the historical inspection records based on the target extraction manner.

12. The apparatus of claim 7, further comprising:
a threshold determination module, which is configured to determine, from at least one of an inspection and repair manual of the target device or a failure repair record of the target device, a target device parameter threshold when the target device is required to be shut down for repair; and
an early warning rule construction module, which is configured to construct an early warning rule as the preset early warning rule according to the target device parameter threshold.

13. An electronic device, **characterized by** comprising:
at least one processor; and
a memory communicatively connected to the at least one processor;
wherein the memory stores an instruction executable by the at least one processor, and the instruction, when executed by the at least one processor, causes the at least one processor to perform the method of any one of claims 1 to 6.

14. A non-transitory computer-readable storage medium storing a computer instruction, **characterized in that** the computer instruction is configured to cause a computer to perform the method of any one of claims 1 to 6.

15. A computer program product, **characterized by** comprising a computer program, wherein the computer program, when executed by a processor, implements the method of any one of claims 1 to 6.
